# EUROPEAN PATENT APPLICATION

(11) **EP 4 679 835 A1**
(43) Date of publication of application: **14.01.2026**
(21) Application number: 24766372.7
(22) Date of filing: 01.03.2024
(51) Int. Cl.: H04N 21/2187, H04N 21/431

(54) **LIVE BROADCAST PAGE DISPLAY METHOD AND APPARATUS, DEVICE, STORAGE MEDIUM, AND PROGRAM PRODUCT**

(30) Priority: 03.03.2023 CN 202310203761
(71) Applicant: Beijing Zitiao Network Technology Co., Ltd., Beijing 100190 (CN)
(72) Inventor: ZHANG, Tiantian, Beijing 100028 (CN)
(74) Representative: Marks & Clerk LLP
(86) International application number: PCT/CN2024/079677
(87) International publication number: WO 2024/183656

(57) **Abstract**

Embodiments of the present disclosure provide a live streaming page displaying method and apparatus, a device, a storage medium, and a program product. The method includes: receiving an identification displaying operation for a live streaming page identification; and in response to the identification displaying operation, displaying at least one live streaming page identification in a first area of a first live streaming page, and displaying a live streaming image of a first live streaming room in a second area of the first live streaming page, the live streaming page identification being used for triggering a display of a corresponding live streaming page.

## Description

### CROSS-REFERENCE TO RELATED APPLICATION(S)

This application claims priority to Chinese Patent Application No. 202310203761.6, entitled "LIVE BROADCAST PAGE DISPLAY METHOD AND APPARATUS, DEVICE, STORAGE MEDIUM, AND PROGRAM PRODUCT", filed with the China National Intellectual Property Administration on March 03, 2023, the disclosure of which is incorporated by reference in its entirety.

### FIELD

Embodiments of the present disclosure relate to the technical field of computers, and in particular, to a live streaming page displaying method and apparatus, a device, a storage medium, and a program product.

### BACKGROUND

At present, in some application programs, a user can switch and view, on a live streaming page, live streaming images of different live streaming rooms based on a live stream on the live streaming page. However, in the related technology, a display mode of the live streaming page is relatively single, which does not facilitate a user to quickly obtain a live streaming room the user wants to view.

### SUMMARY

The embodiments of the present disclosure provide a live streaming page displaying method and apparatus, a device, a storage medium, and a program product.

In a first aspect, an embodiment of the present disclosure provides a live streaming page displaying method, including:
receiving an identification displaying operation for a live streaming page identification; and
in response to the identification displaying operation, displaying at least one live streaming page identification in a first area of a first live streaming page, and displaying a live streaming image of a first live streaming room in a second area of the first live streaming page, the live streaming page identification being used for triggering a display of a corresponding live streaming page.

In a second aspect, an embodiment of the present disclosure further provides a live streaming page displaying apparatus, including:
a first receiving module, configured to receive an identification displaying operation for a live streaming page identification; and
a displaying module, configured to: in response to the identification displaying operation, display at least one live streaming page identification in a first area of a first live streaming page, and display a live streaming image of a first live streaming room in a second area of the first live streaming page, the live streaming page identification being used for triggering a display of a corresponding live streaming page.

In a third aspect, an embodiment of the present disclosure further provides an electronic device, including:
one or more processors; and
a memory, configured to store one or more programs,
wherein the one or more programs, when run by the one or more processors, cause the one or more processors to implement the live streaming page displaying method provided in the embodiments of the present disclosure.

In a fourth aspect, an embodiment of the present disclosure further provides a computer-readable storage medium, storing a computer program therein, wherein the program, when run by a processor, implements the live streaming page displaying method provided in the embodiments of the present disclosure.

In a fifth aspect, an embodiment of the present disclosure further provides a computer program product, wherein the computer program product, when run by a computer, causes the computer to implement the live streaming page displaying method provided in the embodiments of the present disclosure.

### BRIEF DESCRIPTION OF THE DRAWINGS

The above and other features, advantages, and aspects of the various embodiments of the present disclosure will become more apparent by combining the accompanying drawings and referring to the following specific implementations. Throughout the accompanying drawings, identical or similar reference numerals represent identical or similar elements. It should be understood that the accompanying drawings are illustrative, and components and elements may not necessarily be drawn to scale.
FIG. 1 is a flowchart of a live streaming page displaying method according to an embodiment of the present disclosure;
FIG. 2 is a schematic diagram of displaying of a live streaming page according to an embodiment of the present disclosure;
FIG. 3 is a schematic diagram of displaying of another live streaming page according to an embodiment of the present disclosure;
FIG. 4 is a flowchart of another live streaming page displaying method according to an embodiment of the present disclosure;
FIG. 5 is a structural block diagram of a live streaming page displaying apparatus according to an embodiment of the present disclosure; and
FIG. 6 is a schematic structural diagram of an electronic device according to the embodiments of the present disclosure.

### DETAILED DESCRIPTION OF EMBODIMENTS

The embodiments of the present disclosure will be described in detail below with reference to the accompanying drawings. Although the accompanying drawings show some embodiments of the present disclosure, it should be understood that the present disclosure can be implemented in various forms, and should not be explained as being limited to the embodiments stated herein. Rather, these embodiments are provided for understanding the present disclosure more thoroughly and completely. It should be understood that the accompanying drawings and embodiments of the present disclosure are only used for illustration, but are not intended to limit the protection scope of the present disclosure.

It should be understood that respective steps recorded in method implementations of the present disclosure can be executed in different orders and/or in parallel. In addition, the method implementations may include additional steps and/or omit the execution of the steps shown. The scope of the present disclosure is not limited in this aspect.

The term "include" and its variants as used herein mean widespread inclusion, i.e., "including but not limited to". The term "based on" is "based at least in part on". The term "one embodiment" means "at least one embodiment". The term "another embodiment" means "at least another embodiment". The term "some embodiments" means "at least some embodiments". Relevant definitions of other terms will be given in the description below.

It should be noted that the concepts such as "first" and "second" mentioned in the present disclosure are only used to distinguish different apparatuses, modules, or units, and are not intended to limit the order or interdependence of the functions performed by these apparatuses, modules, or units.

It should be noted that the modifications of "one" and "plurality" mentioned in the present disclosure are indicative rather than restrictive, and those skilled in the art should understand that unless otherwise explicitly stated in the context, they should be understood as "one or more".

Names of messages or information interacted between a plurality of apparatuses in the implementations of the present disclosure are only for illustrative purposes and are not intended to limit the scopes of these messages or information.

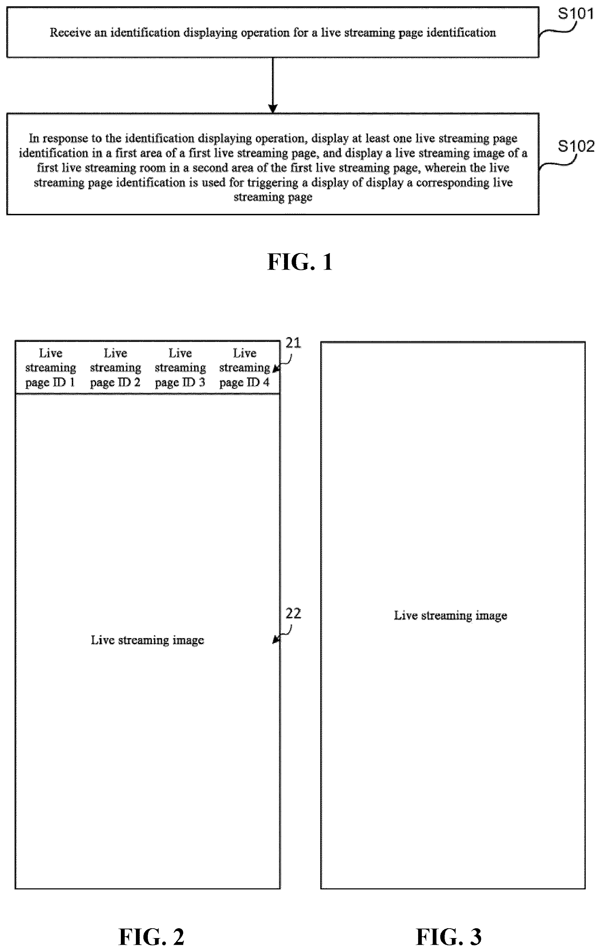

FIG. 1 is a flowchart of a live streaming page displaying method according to an embodiment of the present disclosure. The method may be performed by a live streaming page displaying apparatus. The apparatus may be implemented by software and/or hardware and may be configured in an electronic device, and typically, in a mobile phone or a tablet. The live streaming page displaying method according to this embodiment of the present disclosure is applicable to a scene for display a live streaming page identification on a live streaming page. As shown in FIG. 1, the live streaming page displaying method of this embodiment may include:

S101. An identification displaying operation for a live streaming page identification is received.

The live streaming page identification may be considered to be a page identification corresponding to a live streaming page, and different live streaming pages may have different live streaming page identifications. The live streaming page identification may be used for triggering a display of the corresponding live streaming page. The live streaming page may be understood as a page used for display a live streaming image, such as a page used for display live streaming images of different live streaming rooms of corresponding types. For example, the live streaming page may have a live stream. The live stream may contain a plurality of live streaming rooms. Therefore, based on a live streaming room switching operation performed by a user, the live streaming images of different live streaming rooms in the live stream may be switched to be displayed in the live streaming page. It should be noted that the live streaming page identification may also be referred to as the live channel identification. Different live streaming page identifications may be used for indicating different live streaming types. The live streaming page identification is not a live streaming room identification corresponding to a live streaming room on the live streaming page or a live streamer identification corresponding to a live streamer on the live streaming page. The live streaming page identification may include primary live streaming page identifications, and the primary live streaming page identifications may or may not include secondary live streaming page identifications.

The identification displaying operation may be a triggering operation used for indicating displaying of the live streaming page identification, such as, a triggering operation used for indicating displaying of the live streaming page identification on a first live streaming page. For example, the identification displaying operation may include a triggering operation of switching to a live streaming page or a triggering operation used for indicating the displaying of the live streaming page identification on the first page. Thus, when switching to a live streaming page, this embodiment can display at least one live streaming page identification on the live streaming page, such as displaying the live streaming page in a state of displaying the live streaming page identification. Also, when receiving an identification displaying operation performed in a live streaming page, this embodiment can display at least one live streaming page identification on the live streaming page, such as switching the live streaming page from a state of not displaying the live streaming page identification to a state of displaying the live streaming page identification.

In this embodiment, when the user intends to view the live streaming page identification in the first live streaming page, the user can perform the identification displaying operation for the live streaming page identification. Correspondingly, a current application may receive the identification displaying operation performed by the user.

S102. In response to the identification displaying operation, at least one live streaming page identification is displayed in a first area of a first live streaming page, and a live streaming image of a first live streaming room is displayed in a second area of the first live streaming page, the live streaming page identification being used for triggering a display of a corresponding live streaming page.

The first live streaming page may be considered as a live streaming page that displays the live streaming page identification in response to the identification displaying operation. The first area may be considered as an area, used for display the live streaming page identification, in the first live streaming page. The second area may be considered as an area, used for display the live streaming image, in the first live streaming page. The second area may be further used for display at least one preset page component of the first live streaming page. The first area and the second area may be different areas of the first live streaming page, and may or may not have an overlapping area. Optionally, the first area and the second area may not have an overlapping area, to avoid the live streaming image or the preset page component in the first live streaming page from being blocked by the live streaming page identification that is being displayed.

In this embodiment, different live streaming pages may be used for display live streaming images of different types of live streaming rooms. The types of the live streaming rooms may be determined based on the same or different rules. For example, the types of the live streaming rooms may include a recommendation type, a follow type, and live streaming room types corresponding to different live streaming themes. Correspondingly, the at least one live streaming page identification displayed in the first area may include the live streaming page identification corresponding to a recommendation live streaming page, a live streaming page identification corresponding to a follow live streaming page, and/or the live streaming page identification corresponding to a live streaming page of at least one live streaming theme. The recommendation live streaming page may be used for display a live streaming image of a recommended live streaming room; the follow live streaming page may be used for display a live streaming image of a live streaming room of a live streamer that the user follows; and the live streaming page of a live streaming theme may be used for display a live streaming image of a live streaming room at the corresponding live streaming theme.

The first live streaming room may be a live streaming room currently displayed in the first live streaming page. The first live streaming room be a live streaming room corresponding to a live streaming preview image displayed in a media content displaying page, a live streaming room displayed in the first live streaming page upon receiving the identification displaying operation, or a preset live streaming room in the live stream of the first live streaming page. The preset live streaming room may be set as needed. For example, the preset live streaming room may be an nth (n is a positive integer) live streaming room in the live stream or a last live streaming room viewed by the user when the user exits the first live streaming page at the last time.

For example, when the identification displaying operation for the live streaming page identification has been received, at least one live streaming page identification may be displayed in a first area 21 of the first live streaming page in response to the identification displaying operation, and a live streaming image of the first live streaming room may be displayed in a second area 22 of the first live streaming page, as shown in FIG. 2. In addition, preset page components (not shown in FIG. 2) of the first live streaming page may be further displayed in the second area 22, such as displaying the preset page components of the first live streaming page on a top layer of the live streaming image, and the like.

It can be understood that at least some of the page identification components displayed in a live streaming page (e.g. the first live streaming page) may be live streaming page identifications corresponding to other live streaming pages other than the live streaming page, so that the user can switch pages by triggering the live streaming page identifications corresponding to other live streaming pages. The first live streaming page is taken as an example. When only one live streaming page identification is displayed in the first area of the first live streaming page, the first page identification may not be the live streaming page identification corresponding to the first live streaming page. When at least two live streaming page identifications are displayed in the first area of the first live streaming page, the at least two live streaming page identifications may or may not include the live streaming page identification corresponding to the first live streaming page. Optionally, the at least two live streaming page identifications may include the live streaming page identification corresponding to the first live streaming page. The live streaming page identification corresponding to the first live streaming page may have a different display style from the live streaming page identifications corresponding to other live streaming pages, to indicate the currently displayed live streaming page through the display style. When the live streaming page identification of the first live streaming page is displayed, if a primary live streaming page identification corresponding to the first live streaming page includes secondary live streaming page identifications, at least some of the secondary live streaming page identifications under the primary winning page identification may be further displayed.

In this embodiment, at least one live streaming page identification may be displayed in a live streaming page. Thus, a user can enter the corresponding live streaming page to view a live streaming image of a corresponding type of live streaming room by triggering the live streaming page identification, instead of viewing live streaming images of various live streaming rooms haphazardly on the same page. This not only enriches the display mode of the live streaming page, but also improves the orderliness of the live streaming rooms displayed in the live streaming page, thereby meeting a need of the user for targeted viewing of different types of live streaming rooms, and reducing the difficulty for the user to obtain a live streaming room the user intends to view.

In some embodiments, after the at least one live streaming page identification is displayed in the first area of the first live streaming page, the method further includes: When a preset condition is satisfied, the displaying of the at least one live streaming page identification is canceled in the first live streaming page, wherein the preset condition includes a display duration of the at least one live streaming page identification being equal to a preset duration, and/or, a display canceling operation for the at least one live streaming page identification having been received.

The preset condition may be a condition of canceling the displaying of the live streaming page identification in the first live streaming page. The preset condition may be flexibly set according to a need. For example, the preset condition includes the display duration of the at least one live streaming page identification being equal to the preset duration, and/or, the display canceling operation for the at least one live streaming page identification having been received. The display duration of the live streaming page identification may be understood as a duration of displaying the live streaming page identification in the first area, such as a duration from current time to last time the identification displaying operation has been received. The preset duration may be a duration that is set in advance and cancels the displaying of the live streaming page identification. A specific value of the preset duration may be set according to a need. The display canceling operation may be a triggering operation for indicating cancellation of the displaying of the live streaming page identification in the first area, such as an operation of sliding (sliding up) in a preset direction in the first live streaming page, or a tapping operation in the first live streaming page. In this case, the display canceling operation includes an up-sliding operation and/or a tapping operation performed in the first live streaming page.

In the above implementation, when the preset condition is satisfied, the displaying of the live streaming page identification displayed in the first live streaming page may be canceled in the first live streaming page, so that the user can view the live streaming image in the first live streaming page.

Referring to FIG. 3, for example, when the duration of displaying the live streaming page identification in the first area is equal to the preset duration, the displaying of the live streaming page identification in the first live streaming page may be cancelled; and/or, when the display canceling operation in the first live streaming page is received, for example, when it is monitored that the user slides up in the first live streaming page or taps on a non-control area of the first live streaming page, the displaying of the live streaming page identification displayed in the first live streaming page can be canceled.

In the above implementation, a mode for canceling the displaying of the live streaming page identification displayed in the first live streaming page may be flexibly set. The first area being located above the second area is taken as an example. For example, the displaying of the live streaming page identification displayed in the first live streaming page may be canceled, and content (e.g. the live streaming image and/or a preset page element) displayed in the second area is controlled to move up, to enlarge a display area of the live streaming image.

In this embodiment, when a live streaming page is displayed, the user can exit the live streaming page by performing a preset triggering operation, such as returning to the media content displaying page. The preset triggering operation may be flexibly set. For example, the preset triggering operation may include an operation of triggering a close control of the live streaming page, a triggering operation of sliding at a preset edge (e.g. a left side edge and/or a right side edge) of a screen in a preset direction, a triggering operation of sliding to the right on the live streaming page when there are no other live streaming page identifications on the left of the live streaming page identification corresponding to the live streaming page, or the like.

The live streaming page displaying method of this embodiment includes: receiving an identification displaying operation for a live streaming page identification; and in response to the identification displaying operation, displaying at least one live streaming page identification in a first area of a first live streaming page, and displaying a live streaming image of a first live streaming room in a second area of the first live streaming page, wherein the live streaming page identification is used for triggering and displaying a corresponding live streaming page. In this embodiment, by using the above technical solution, the at least one live streaming page identification is displayed in the live streaming page. Thus, a user can enter the corresponding live streaming page to view a live streaming image of a corresponding type of live streaming room by triggering the live streaming page identification. This not only enriches the display mode of the live streaming page, but also improves the orderliness of the live streaming rooms displayed in the live streaming page, thereby meeting a need of the user for targeted viewing of different types of live streaming rooms, and reducing the difficulty for the user to obtain a live streaming room the user intends to view.

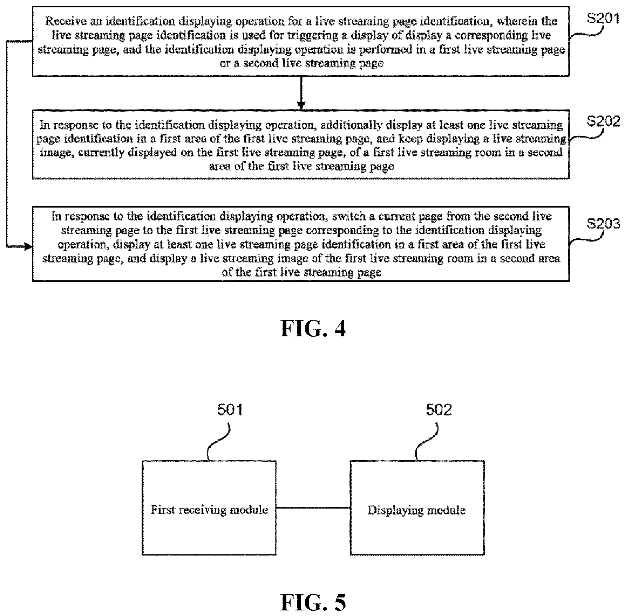

FIG. 4 is a flowchart of another live streaming page displaying method according to an embodiment of the present disclosure. The solution in this embodiment can be combined with one or more optional solutions in the above embodiment. Optionally, the identification displaying operation is performed in the first live streaming page. The at least one live streaming page identification is displayed in the first area of the first live streaming page, and the live streaming image of the first live streaming room is displayed in the second area of the first live streaming page, which includes: The at least one live streaming page identification is additionally displayed in the first area of the first live streaming page, and the live streaming image, currently displayed in the first live streaming page, of the first live streaming room is kept being displayed in the second area of the first live streaming page.

Optionally, the identification displaying operation is performed in a second live streaming page. The at least one live streaming page identification is displayed in the first area of the first live streaming page, and the live streaming image of the first live streaming room is displayed in the second area of the first live streaming page, which includes: A current page is switched from the second live streaming page to the first live streaming page corresponding to the identification displaying operation, the at least one live streaming page identification is displayed in the first area of the first live streaming page, and the live streaming image of the first live streaming room is displayed in the second area of the first live streaming page.

Correspondingly, as shown in FIG. 4, the live streaming page displaying method of this embodiment may include:

S201. An identification displaying operation for a live streaming page identification is received. S202 or S203 is executed. The live streaming page identification is used for triggering a display of a corresponding live streaming page, and the identification displaying operation is performed in a first live streaming page or a second live streaming page.

S202. In response to the identification displaying operation, at least one live streaming page identification is additionally displayed in a first area of the first live streaming page, and a live streaming image, currently displayed in the first live streaming page, of a first live streaming room is kept being displayed in a second area of the first live streaming page.

In this embodiment, the identification displaying operation may be performed in the first live streaming page. For example, the identification displaying operation may be an operation of sliding down when a live streaming image of a headmost live streaming room in a live stream of the first live streaming page is displayed in the first live streaming page. For example, the identification displaying operation may be a triggering operation for indicating additional displaying of the live streaming page identification in the first live streaming page, such as a down-sliding operation performed in the first live streaming page. The first live streaming page may be a live streaming page on which the identification displaying operation is performed. The first live streaming room may be a live streaming room corresponding to the live streaming image displayed in the first live streaming page when the identification displaying operation is received, such as a headmost live streaming room in a live stream of the first live streaming room page. In this case, optionally, the first live streaming room is the headmost live streaming room in the live stream of the first live streaming page, and the identification displaying operation includes a down-sliding operation performed in the first live streaming page.

Specifically, when the identification displaying operation performed in the first live streaming page is received, for example, when it is monitored that a user slides down in the first live streaming page during the displaying of the live streaming image of the headmost live streaming room in the live stream of the first live streaming page, the first live streaming page may be kept being displayed; at least one live streaming page identification may be additionally displayed in the first area of the first live streaming page; and the live streaming image of the first live streaming room may be displayed in the second area of the first live streaming page.

It can be understood that in a case that a vertical sliding operation performed by the user in the first live streaming page is monitored when the first live streaming page is in a state of displaying a live streaming page identification, if the first live streaming page displays a live streaming image of the headmost live streaming room in its live stream and the vertical sliding operation is an up-sliding operation, the displaying of the live streaming page identification in the first live streaming page can be canceled. For example, the first live streaming page is switched from the state of displaying the live streaming page identification to a state of not displaying a live streaming page identification. In other words, in the first live streaming page, the live streaming page identification is switched from a displayed state to a hidden state. Otherwise, no response is made to the vertical sliding operation, or other response events may be executed. For example, the live stream of the first live streaming page is updated. The vertical sliding operation may include the up-sliding operation and/or a down-sliding operation.

In a case that the vertical sliding operation performed by the user in the first live streaming page is monitored in the state of not displaying a live streaming page identification, the live streaming image displayed in the first live streaming page may be switched based on the live stream of the first live streaming page until the headmost live streaming room or a last live streaming room in the live stream is displayed. When the headmost live streaming room in the live stream is displayed, if the user slides down in the first live streaming page, it is determined that the identification displaying operation has been received. When the last live streaming room in the live stream is displayed, if the user slides up in the first live streaming page, no response may be made to the up-sliding operation, or at least some of live streaming rooms in the live stream are updated, and switching is performed on the live streaming rooms based on the updated live stream.

S203. In response to the identification displaying operation, a current page is switched from the second live streaming page to the first live streaming page corresponding to the identification displaying operation, the at least one live streaming page identification is displayed in the first area of the first live streaming page, and the live streaming image of the first live streaming room is displayed in the second area of the first live streaming page.

In this embodiment, the identification displaying operation may be performed in the second live streaming page. For example, the identification displaying operation may be an operation of triggering a live streaming page identification displayed in the second live streaming page, a preset transverse sliding operation performed in the second live streaming page, or the like. Optionally, the identification displaying operation includes a triggering operation for the live streaming page identification corresponding to the first live streaming page, and/or, a preset transverse sliding operation preformed in the second live streaming page. In this case, the identification displaying operation may be used for indicating switching of a currently displayed live streaming page, such as indicating switching of the currently displayed live streaming page from the second live streaming page to the first live streaming page. The first live streaming page may be a live streaming page to which the identification displaying operation indicates switching, such as a live streaming page corresponding to the live streaming page identification on which the identification displaying operation is performed, or a live streaming page corresponding to a live streaming page identification that is adjacent to the live streaming page identification of the second live streaming page and corresponds to a sliding direction of the identification displaying operation. The first live streaming room may be a preset live streaming room in the live stream of the first live streaming page, such as an nth live streaming room in the live stream of the first live streaming page, or a live streaming room displayed in the first live streaming page when the user exits the first live streaming page at the last time. The first live streaming page and the second live streaming page may be different live streaming pages.

For example, when the identification displaying operation performed in the second live streaming page has been received, for example, when it is monitored that the user triggers a live streaming page identification displayed in the second live streaming page or when it is monitored that the user transversely slides on the second live streaming page, the first live streaming page corresponding to the identification displaying operation may be determined. The current page is switched from the second live streaming page to the first live streaming page; at least one live streaming page identification is displayed in the first area of the first live streaming page; and the live streaming image of the first live streaming room is displayed in the second area of the first live streaming page.

It can be understood that in a case that primary live streaming page identifications corresponding to the second live streaming page include secondary live streaming page identifications, when it is monitored that the user transversely slides on the second live streaming page, live streaming pages may be switched according to an arrangement order of the primary live streaming page, or live streaming pages may be switched according to an arrangement order of the secondary live streaming page identifications of the primary live streaming page identifications corresponding to the second live streaming page. This embodiment does not limit this. When the current page is a live streaming page of a live streaming room and no live streaming page identification is displayed in the live streaming page, if the transverse sliding operation of the user has been received, a live streaming page of another live streaming room may be displayed in the current page and live streaming page identifications may be displayed in the live streaming page of the another live streaming room, so that the user can quickly obtain a live streaming room of interest.

In addition, when switching is performed from the second live streaming page to the first live streaming page, if there is no live streaming room that matches a type of a live streaming room corresponding to the first live streaming page, a prompt may be shown to the user, and a live streaming image of a preset type of live streaming room may be further displayed in the first live streaming page. For example, a live streaming image of a recommended live streaming room is displayed in the first live streaming page. A specific setting can be made according to a need.

In this embodiment, when the identification displaying operation has been received, the live streaming image of the first live streaming room may not be controlled to move, but at least one live streaming page identification may be directly displayed in the first area of the first live streaming page, and the live streaming image of the first live streaming room may be displayed in the second area of the first live streaming page.

In this embodiment, when the identification displaying operation has been received, the live streaming image of the first live streaming room may also be controlled to move. For example, when the identification displaying operation is performed in the first live streaming page, the live streaming image and/or a preset page component displayed in the first live streaming page may be controlled to move to the second area for display, such as, to move downwards to the second area for display, and at least one live streaming page identification is additionally displayed in the first area of the first live streaming page. When the identification displaying operation is not performed in the first live streaming page, the first live streaming page may be first displayed using the state of not displaying a live streaming page identification. Then, the live streaming image and/or the preset page component displayed in the first live streaming page may be controlled to move to the second area for display, and at least one live streaming page identification may be additionally displayed in the first area of the first live streaming page.

In this case, the live streaming image of the first live streaming room is displayed in the second area of the first live streaming page, which includes: The live streaming image of the first live streaming room and at least part of preset page components in the first live streaming page are controlled to move from original display positions to the second area for display.

The preset page components may include page components other than the live streaming page identification in the first live streaming page, such as at least some page elements in the first live streaming page. The page elements may be, for example, interaction controls or other page elements. A specific setting can be made according to a need.

In some embodiments, the live streaming page displaying method of this embodiment further includes: The live streaming image of the first live streaming room is displayed in full screen. The at least one live streaming page identification is displayed in the first area of the first live streaming page, and the live streaming image of the first live streaming room is displayed in the second area of the first live streaming page, which includes: The live streaming image of the first live streaming room is controlled to move to the second area of the first live streaming page for display, or the live streaming image of the first live streaming room is controlled to be scaled to the second area of the first live streaming page for display.

In the above implementation, the live streaming image of the first live streaming room may be displayed in full screen in the first live streaming page, and when the identification displaying operation performed in the first live streaming page has been received, the live streaming image of the first live streaming room may be moved to the second area of the first live streaming page for display, or the live streaming image of the first live streaming room may be scaled to the second area of the first live streaming page for display. Or, when the identification displaying operation performed in the second page has been received, the live streaming image of the first live streaming room may be first displayed in full screen in the first live streaming page; and then, the live streaming image of the first live streaming room may be removed to the second area of the first live streaming page for display, or the live streaming image of the first live streaming room may be scaled to the second area of the first live streaming page for display.

It can be understood that when the live streaming image of the first live streaming room is controlled to move or scale to the second area of the first live streaming page for display, display positions of the preset page components in the first live streaming page may be further adjusted. For example, by keeping relative positions between the preset page components and the live streaming image unchanged, the preset page components may be controlled to move synchronously with the live streaming image, and displaying of a preset page component that is moved out of the second area and/or content of the live streaming image that is moved out of the second area is canceled, for example, displaying of a preset page component that is not in the second area after being moved and/or content of the live streaming image that is not in the second area after being moved is canceled. Or, the preset page components and the live streaming image may be controlled to be synchronously scaled. Or, by keeping sizes of the preset page components unchanged, distances between the preset page components, and the live streaming image are controlled to be synchronously scaled, to ensure that the page components can be displayed in the second area.

In some embodiments, before the identification displaying operation for the live streaming page identification is received, the live streaming page displaying method further includes: A live streaming page displaying operation performed in a media content displaying page is received; and in response to the live streaming page displaying operation, the current page is switched from the media content displaying page to a target live streaming page corresponding to the media content displaying page, and a live streaming image of a second live streaming room is displayed in the target live streaming page, wherein the target live streaming page includes the first live streaming page, the second live streaming page, or a third live streaming page.

In the above implementation, the user can perform switching from the media content displaying page to a live streaming page, such as the first live streaming page, the second live streaming page, or the third live streaming page that is different from the first live streaming page and the second live streaming page.

The media content displaying page may be considered as a page for display media content posted in a current application, such as a video playback page for display a target media content stream. The target media content stream may be a media content stream corresponding to the media content displaying page. The target media content stream may include various types of media content, which may include a video, a short video, and/or a live streaming, belonging to a mixed type of media content stream. It can be understood that a live streaming page (e.g. the first live streaming page, the second live streaming page, and/or the third live streaming page) may be used for display a live stream. The live stream may be a video stream of a live streaming type and belong to an internal live stream. The live stream is composed of a plurality of corresponding types of live streaming rooms.

The live streaming page displaying operation may be a triggering operation for indicating displaying of a live streaming page, and may be performed in the media content displaying page, such as an operation of triggering the media content displaying page to enter a live streaming room. In this case, for example, the live streaming page displaying operation may be used for indicating displaying of a live streaming image of a corresponding live streaming room on a live streaming page. The target live streaming page may be a live streaming page corresponding to the media content displaying page on which the live streaming page displaying operation is performed, such as the first live streaming page, the second live streaming page, or the third live streaming page. The second live streaming room may be a live streaming room that the live streaming page displaying operation indicates displaying of the live streaming image of the live streaming room, such as a live streaming page corresponding to a live streaming preview image displayed in the media content displaying page. The second live streaming room may be the same as or different from the first live streaming room.

Specifically, the live streaming page displaying operation performed in the media content displaying page may be received; and in response to the live streaming page displaying operation, the current page is switched from the media content displaying page to the target live streaming page corresponding to the media content displaying page, and the live streaming image of the second live streaming room is displayed in the target live streaming page.

In this embodiment, a correspondence relationship between each media content displaying page and each live streaming page may be set in advance, so that when the live streaming page displaying operation performed in a media content displaying page has been received, the live streaming page corresponding to the media content displaying page may be determined based on the correspondence relationship. For example, the correspondence relationship between each media content displaying page and each live streaming page may be determined according to a type of displayed content. For example, a recommended media content displaying page for display recommended media content may be set to correspond to a recommended live streaming page for display a live streaming image of a recommended live streaming room; a followed media content displaying page for display media content posted by a followed user may be set to correspond to a followee live streaming page for display a live streaming image of a live streaming room of a followed live streamer; and the like.

In this embodiment, the target live streaming room may be a live streaming room corresponding to the live streaming preview image displayed in the media content displaying page when the live streaming page displaying operation has been received. For example, the media content stream in the media content displaying page may include live streaming preview images of one or more live streaming rooms, and different pieces of media content (including live streaming rooms contained in the media content stream) may be automatically switched to be displayed in the media content displaying page or may be switched to be displayed in the media content displaying page based on a media content switching operation performed by the user. When a live streaming preview image of a live streaming room is displayed in the media content displaying page, the user may enter the live streaming room by performing the live streaming page displaying operation, to view a live streaming image of the live streaming room. In this case, optionally, before the live streaming page displaying operation performed in the media content displaying page is received, the live streaming page displaying method further includes: A live streaming preview image of the second live streaming room is displayed in the media content displaying page. In this case, the live streaming page displaying operation may include an operation of triggering any non-control area of the live streaming preview image, an operation of triggering a preset control displayed in the media content, or the like.

For example, a live streaming preview image of a live streaming room may be displayed in the media content displaying page. When the live streaming page displaying operation performed in the media content displaying page has been received, the live streaming page corresponding to the media content displaying page is taken as the target live streaming page. The live streaming room is taken as the second live streaming room. The current page is switched from the media content displaying page to the target live streaming page, and the live streaming image of the target live streaming room is displayed in the target live streaming page.

It can be understood that the live streaming preview image may not be displayed in the media content displaying page. For example, when a video/short video is displayed in the live streaming page, if a live streamer of the video/short video currently conducts live streaming, a live streaming identification may be displayed, and the user may trigger the live streaming identification to perform the live streaming page displaying operation. Or, a live streamer identification of one or more live streamers currently conducting live streaming may be displayed in the media content displaying page, and the user may perform the live streaming page displaying operation by triggering the live streamer identification.

By using the above technical solution, this embodiment can further enrich the execution mode of the identification displaying operation, thereby meeting different needs of the user for viewing the live streaming image of the first live streaming room and the live streaming page identification, and switching live streaming pages.

FIG. 5 is a structural block diagram of a live streaming page displaying apparatus according to an embodiment of the present disclosure. The apparatus may be implemented by software and/or hardware and may be configured in an electronic device, typically, in a mobile phone or a tablet. By performing the live streaming page displaying method, the live streaming page displaying apparatus is suitable for display a live streaming page identification on a live streaming page. As shown in FIG. 5, the live streaming page displaying apparatus of this embodiment may include a first receiving module 501 and a displaying module 502.

The first receiving module 501 is configured to receive an identification displaying operation for a live streaming page identification; and

the displaying module 502 is configured to: in response to the identification displaying operation, display at least one live streaming page identification in a first area of a first live streaming page, and display a live streaming image of a first live streaming room in a second area of the first live streaming page, the live streaming page identification being used for triggering a display of a corresponding live streaming page.

The live streaming page displaying apparatus of this embodiment receives an identification displaying operation for a live streaming page identification through the first receiving module; and through the displaying module, in response to the identification displaying operation, displays at least one live streaming page identification in a first area of a first live streaming page, and displays a live streaming image of a first live streaming room in a second area of the first live streaming page, wherein the live streaming page identification is used for triggering and displaying a corresponding live streaming page. In this embodiment, by using the above technical solution, the at least one live streaming page identification is displayed in the live streaming page. Thus, a user can enter the corresponding live streaming page to view a live streaming image of a corresponding type of live streaming room by triggering the live streaming page identification. This not only enriches the display mode of the live streaming page, but also improves the orderliness of the live streaming rooms displayed in the live streaming page, thereby meeting a need of the user for targeted viewing of different types of live streaming rooms, and reducing the difficulty for the user to obtain a live streaming room the user intends to view.

In the above solution, the identification displaying operation may be performed in the first live streaming page. The displaying module 502 may be configured to: additionally display at least one live streaming page identification in a first area of the first live streaming page, and keep displaying a live streaming image, currently displayed in the first live streaming page, of a first live streaming room in a second area of the first live streaming page.

In the above solution, the first live streaming room may be a headmost live streaming room in a live stream of the first live streaming page; and the identification displaying operation may include a down-sliding operation performed in the first live streaming page.

In the above solution, the identification displaying operation may be performed in a second live streaming page, and the displaying module 502 may be configured to: switch a current page from the second live streaming page to the first live streaming page corresponding to the identification displaying operation, display the at least one live streaming page identification in the first area of the first live streaming page, and display the live streaming image of the first live streaming room in the second area of the first live streaming page.

In the above solution, the identification displaying operation may include a triggering operation for the live streaming page identification corresponding to the first live streaming page, and/or, a preset transverse sliding operation preformed in the second live streaming page.

Further, the live streaming page displaying apparatus of this embodiment may include: a second receiving module, configured to: before receiving the identification displaying operation for the live streaming page identification, receiving a live streaming page displaying operation performed in a media content displaying page; and a page switching module, configured to: in response to the live streaming page displaying operation, switch the current page from the media content displaying page to a target live streaming page corresponding to the media content displaying page, and display a live streaming image of a second live streaming room in the target live streaming page, wherein the target live streaming page includes the first live streaming page, the second live streaming page, or a third live streaming page.

Further, the live streaming page displaying apparatus of this embodiment may include: an image preview module, configured to: before receiving the live streaming page displaying operation performed in the media content displaying page, display a live streaming preview image of the second live streaming room in the media content displaying page.

In the above solution, the displaying module 502 may be configured to control the live streaming image of the first live streaming room and at least part of preset page components in the first live streaming page to move from original display positions to the second area for display.

Further, the live streaming page displaying apparatus of this embodiment may include: a full-screen displaying module, configured to display the live streaming image of the first live streaming room in full screen. The displaying module 502 may be configured to: control the live streaming image of the first live streaming room to move to the second area of the first live streaming page for display, or control the live streaming image of the first live streaming room to be scaled to the second area of the first live streaming page for display.

Further, the live streaming page displaying apparatus of this embodiment may include a display canceling module, configured to: after the at least one live streaming page identification is displayed in the first area of the first live streaming page, when a preset condition is satisfied, cancel the displaying of the at least one live streaming page identification in the first live streaming page, wherein the preset condition includes a display duration of the at least one live streaming page identification being equal to a preset duration, and/or, a display canceling operation for the at least one live streaming page identification having been received.

In this case, the display canceling operation may include an up-sliding operation and/or a tapping operation performed in the first live streaming page.

The live streaming page displaying apparatus of this embodiment of the present disclosure may implement the live streaming page displaying method of any embodiment of the present disclosure, and includes corresponding functional modules for implementing the live streaming page displaying method and corresponding beneficial effects. For technical details not described in this embodiment, refer to the live streaming page displaying method of any embodiment of the present disclosure.

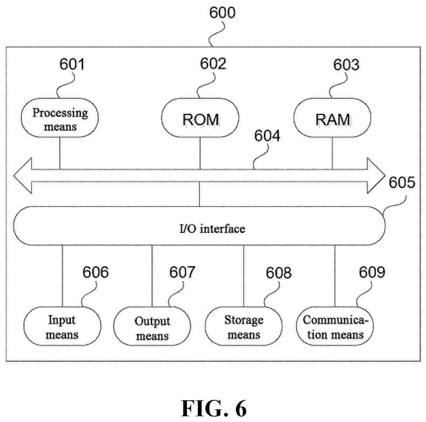

Reference is now made to FIG. 6 below, which illustrates a schematic structural diagram of an electronic device (i.e., a terminal device) 600 suitable for implementing an embodiment of the present disclosure. The terminal device in the embodiments of the present disclosure may include, but is not limited to, a mobile phone, a laptop, a digital broadcast receiver, a Personal Digital Assistant (PDA), a Portable Android Device (PAD), a Portable Media Player (PMP), a mobile terminal such as a vehicle-mounted terminal (for example, a vehicle-mounted navigation terminal), and a fixed terminal such as digital television (TV) and a desktop computer. The electronic device shown in FIG. 6 is only an example and should not impose any limitations on the functionality and scope of use of the embodiments of the present disclosure.

As shown in FIG. 6, the electronic device 600 may include a processing apparatus (such as a central processing unit and graphics processor) 601 that can perform various appropriate actions and processing according to programs stored in a Read-Only Memory (ROM) 602 or loaded from a storage means 608 to a Random Access Memory (RAM) 603. The RAM 603 further stores various programs and data required for the operation of the electronic device 600. The processing apparatus 601, the ROM 602, and the RAM 603 are connected to each other through a bus 604. An Input/Output (I/O) interface 605 is also connected to the bus 604.

Usually, following apparatuses can be connected to the I/ O interface 605: an input means 606 including a touch screen, a touchpad, a keyboard, a mouse, a camera, a microphone, an accelerometer, a gyroscope, and the like; an output means 607 including a Liquid Crystal Display (LCD), a speaker, a vibrator, and the like; a storage means 608 including a magnetic tape, a hard disk drive, and the like; and a communication means 609. The communication means 609 can allow the electronic device 600 to wirelessly or wiredly communicate with other devices to exchange data. Although FIG. 6 shows the electronic device 600 with various apparatuses, it should be understood that the electronic device 600 is not required to implement or have all the apparatuses shown, and can alternatively implement or have more or fewer apparatuses.

Particularly, according to the embodiments of the present disclosure, the process described in the reference flowchart above can be implemented as a computer software program. For example, the embodiments of the present disclosure include a computer program product, including a computer program carried on a non-transitory computer-readable medium, and the computer program includes program codes used for performing the methods shown in the flowcharts. In such an embodiment, the computer program may be downloaded and installed from a network through the communication means 609, or installed from the memory 608, or installed from the ROM 602. When the computer program is executed by the processing apparatus 601, the above functions defined in the methods of the embodiments of the present application are executed.

It should be noted that the computer-readable medium mentioned in the present disclosure can be a computer-readable signal medium, a computer-readable storage medium, or any combination of the computer-readable signal medium and the computer-readable storage medium. The computer-readable storage medium can be, for example, but not limited to, electric, magnetic, optical, electromagnetic, infrared, or semiconductor systems, apparatuses, or devices, or any combination of the above. More specific examples of the computer-readable storage medium may include, but are not limited to: an electrical connection with one or more wires, a portable computer disk, a hard disk drive, a RAM, a ROM, an Erasable Programmable Read Only Memory (EPROM) or flash memory, an optical fiber, a Compact Disc Read-Only Memory (CD-ROM), an optical storage device, a magnetic storage device, or any suitable combination of the above. In the present disclosure, the computer-readable storage medium may be any tangible medium that contains or stores a program, and the program can be used by or in combination with an instruction execution system, apparatus, or device. In the present disclosure, the computer-readable signal media may include data signals propagated in a baseband or as part of a carrier wave, which carries computer-readable program codes. The propagated data signals can be in various forms, including but not limited to: electromagnetic signals, optical signals, or any suitable combination of the above. The computer-readable signal medium may also be any computer-readable medium other than a computer-readable storage medium. The computer-readable signal medium can send, propagate, or transmit programs for use by or in combination with an instruction execution system, apparatus, or device. The program codes contained in the computer-readable medium can be transmitted using any suitable medium, including but are not limited to: a wire, an optical cable, a Radio Frequency (RF), and the like, or any suitable combination of the above.

In some implementations, clients and servers can communicate using any currently known or future developed network protocol such as a HyperText Transfer Protocol (HTTP), and can intercommunicate and be interconnected with digital data in any form or medium (for example, a communication network). Examples of the communication network include a Local Area Network (LAN), a Wide Area Network (WAN), an internet (such as an Internet), a point-to-point network (such as an ad hoc point-to-point network, and any currently known or future developed network.

The computer-readable medium may be included in the electronic device or exist alone and is not assembled into the electronic device.

The above computer-readable medium carries one or more programs. The above one or more programs, when run by the electronic device, cause the electronic device to: receive an identification displaying operation for a live streaming page identification; and in response to the identification displaying operation, display at least one live streaming page identification in a first area of a first live streaming page, and display a live streaming image of a first live streaming room in a second area of the first live streaming page, the live streaming page identification being used for triggering a display of a corresponding live streaming page.

Computer program codes for performing the operations of the present disclosure may be written in one or more programming languages or a combination thereof. The above programming languages include but are not limited to an object-oriented programming language such as Java, Smalltalk, and C++, and conventional procedural programming languages such as "C" language or similar programming languages. The program codes may be executed entirely on a user computer, partly on a user computer, as a stand-alone software package, partly on a user computer and partly on a remote computer, or entirely on a remote computer or a server. In the case of the remote computer, the remote computer may be connected to the computer of the user through any kind of network, including a Local Area Network (LAN) or a Wide Area Network (WAN), or may be connected to an external computer (for example, connected through the Internet with the aid of an Internet service provider).

The flowcharts and block diagrams in the accompanying drawings illustrate possible system architectures, functions, and operations that may be implemented by a system, a method, and a computer program product according to various embodiments of the present disclosure. In this regard, each block in a flowchart or a block diagram may represent a module, a program, or a part of a code. The module, the program, or the part of the code includes one or more executable instructions used for implementing specified logic functions. In some implementations used as substitutes, functions annotated in blocks may alternatively occur in a sequence different from that annotated in an accompanying drawing. For example, actually two blocks shown in succession may be performed basically in parallel, and sometimes the two blocks may be performed in a reverse sequence. This is determined by a related function. It is also be noted that each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

The units described in the embodiments of the present disclosure can be implemented through software or hardware. The name of a module does not constitute a limitation on the unit itself in a case.

The functions described herein above may be performed, at least in part, by one or a plurality of hardware logic components. For example, nonrestrictively, example hardware logic components that can be used include: a Field Programmable Gate Array (FPGA), an Application Specific Integrated Circuit (ASIC), Application Specific Standard Parts (ASSP), a System on Chip (SOC), a Complex Programmable Logic Device (CPLD), and the like.

In the context of the present disclosure, a machine-readable medium may be a tangible medium that may include or store a program for use by an instruction execution system, apparatus, or device or in connection with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above content. More specific examples of the machine-readable medium may include an electrical connection based on one or more wires, a portable computer disk, a hard disk drive, a RAM, a ROM, an EPROM or flash memory, an optical fiber, a CD-ROM, an optical storage device, a magnetic storage device, or any suitable combinations of the above contents.

According to one or more embodiments of the present disclosure, Example 1 provides a live streaming page displaying method, including:

receiving an identification displaying operation for a live streaming page identification; and

in response to the identification displaying operation, displaying at least one live streaming page identification in a first area of a first live streaming page, and displaying a live streaming image of a first live streaming room in a second area of the first live streaming page, the live streaming page identification being used for triggering a display of a corresponding live streaming page.

According to one or more embodiments of the present disclosure, in Example 2, in the method according to Example 1, the identification displaying operation is performed in the first live streaming page, and displaying the at least one live streaming page identification in the first area of the first live streaming page, and displaying the live streaming image of the first live streaming room in the second area of the first live streaming page includes:

additionally displaying the at least one live streaming page identification in the first area of the first live streaming page, and keeping displaying the live streaming image, currently displayed in the first live streaming page, of the first live streaming room in the second area of the first live streaming page.

According to one or more embodiments of the present disclosure, in Example 3, in the method according to Example 2, the first live streaming room is a headmost live streaming room in a live stream corresponding to the first live streaming page; and the identification displaying operation includes a down-sliding operation performed in the first live streaming page.

According to one or more embodiments of the present disclosure, in Example 4, in the method according to Example 1, the identification displaying operation is performed in a second live streaming page, and displaying the at least one live streaming page identification in the first area of the first live streaming page, and displaying the live streaming image of the first live streaming room in the second area of the first live streaming page includes:

switching a current page from the second live streaming page to the first live streaming page corresponding to the identification displaying operation, displaying the at least one live streaming page identification in the first area of the first live streaming page, and displaying the live streaming image of the first live streaming room in the second area of the first live streaming page.

According to one or more embodiments of the present disclosure, in Example 5, in the method according to Example 4, the identification displaying operation comprises a triggering operation for the live streaming page identification corresponding to the first live streaming page, and/or, a preset transverse sliding operation preformed in the second live streaming page.

According to one or more embodiments of the present disclosure, in Example 6, before receiving the identification displaying operation for the live streaming page identification, the method according to any one of Examples 1 to 5 further includes:
receiving a live streaming page displaying operation performed in a media content displaying page; and
in response to the live streaming page displaying operation, switching the current page from the media content displaying page to a target live streaming page corresponding to the media content displaying page, and displaying a live streaming image of a second live streaming room in the target live streaming page, wherein the target live streaming page comprises the first live streaming page, the second live streaming page, or a third live streaming page.

According to one or more embodiments of the present disclosure, in Example 7, before receiving the live streaming page displaying operation performed in the media content displaying page, the method according to Example 6 further includes:
displaying a live streaming preview image of the second live streaming room in the media content displaying page.

According to one or more embodiments of the present disclosure, in Example 8, in the method according to any one of Examples 1 to 5, displaying the live streaming image of the first live streaming room in the second area of the first live streaming page includes:
controlling the live streaming image of the first live streaming room and at least part of preset page components in the first live streaming page to move from original display positions to the second area for display.

According to one or more embodiments of the present disclosure, in Example 9, the method according to Example 8 further includes:
displaying the live streaming image of the first live streaming room in full screen,
wherein displaying the at least one live streaming page identification in the first area of the first live streaming page, and displaying the live streaming image of the first live streaming room in the second area of the first live streaming page includes:
controlling the live streaming image of the first live streaming room to move to the second area of the first live streaming page for display, or controlling the live streaming image of the first live streaming room to be scaled to the second area of the first live streaming page for display.

According to one or more embodiments of the present disclosure, in Example 10, after displaying the at least one live streaming page identification in the first area of the first live streaming page, the method according to any one of Examples 1 to 5 further includes:
when a preset condition is satisfied, canceling the displaying of the at least one live streaming page identification in the first live streaming page, wherein the preset condition comprises a display duration of the at least one live streaming page identification being equal to a preset duration, and/or, a display canceling operation for the at least one live streaming page identification having been received.

According to one or more embodiments of the present disclosure, in Example 11, in the method according to Example 10, the display canceling operation includes an up-sliding operation and/or a tapping operation performed in the first live streaming page.

According to one or more embodiments of the present disclosure, Example 12 provides a live streaming page displaying apparatus, including:
a first receiving module, configured to receive an identification displaying operation for a live streaming page identification; and
a displaying module, configured to: in response to the identification displaying operation, display at least one live streaming page identification in a first area of a first live streaming page, and display a live streaming image of a first live streaming room in a second area of the first live streaming page, the live streaming page identification being used for triggering a display of a corresponding live streaming page.

According to one or more embodiments of the present disclosure, Example 13 provides an electronic device, including:
one or more processors; and
a memory, configured to store one or more programs,
wherein the one or more programs, when run by the one or more processors, cause the one or more processors to implement the live streaming page displaying method according to any of Examples 1 to 11.

According to one or more embodiments of the present disclosure, Example 14 provides a computer-readable storage medium, having a computer program stored therein, wherein the program, when run by a processor, implements the live streaming page displaying method according to any one of examples 1 to 11.

According to one or more embodiments of the present disclosure, Example 15 provides a computer program product, wherein the computer program product, when run by a computer, causes the computer to implement the live streaming page displaying method according to any one of examples 1 to 11.

The foregoing descriptions are merely preferred embodiments of the present disclosure and explanations of the applied technical principles. Those skilled in the art should understand that the scope of disclosure referred to in the present disclosure is not limited to the technical solutions formed by specific combinations of the aforementioned technical features, but also covers other technical solutions formed by any combinations of the aforementioned technical features or their equivalent features without departing from the concept of the above disclosure, for example, a technical solution formed by replacing the above features with (but not limited to) technical features with similar functions disclosed in the present disclosure.

In addition, although various operations are depicted in a specific order, this should not be understood as requiring these operations to be executed in the specific order shown or in a sequential order. In certain environments, multitasking and parallel processing may be advantageous. Similarly, although several specific implementation details are included in the above discussion, these should not be interpreted as limiting the scope of the present disclosure. Some features described in the context of individual embodiments can also be combined and implemented in a single embodiment. On the contrary, various features that are described in the context of the single embodiment may also be implemented in a plurality of embodiments separately or in any suitable sub-combinations.

Although the subject matter has been described in a language specific to structural features and/or method logical actions, it should be understood that the subject matter limited in the attached claims may not necessarily be limited to the specific features or actions described above. On the contrary, the specific features and actions described above are only exemplary forms for implementing the claims.

## Claims

1. A live streaming page displaying method, comprising:
receiving an identification displaying operation for a live streaming page identification; and
in response to the identification displaying operation, displaying at least one live streaming page identification in a first area of a first live streaming page, and displaying a live streaming image of a first live streaming room in a second area of the first live streaming page, the live streaming page identification being used for triggering a display of a corresponding live streaming page.

2. The method of claim 1, wherein the identification displaying operation is performed in the first live streaming page, and displaying the at least one live streaming page identification in the first area of the first live streaming page, and displaying the live streaming image of the first live streaming room in the second area of the first live streaming page comprises:
additionally displaying the at least one live streaming page identification in the first area of the first live streaming page, and keeping displaying the live streaming image, currently displayed in the first live streaming page, of the first live streaming room in the second area of the first live streaming page.

3. The method of claim 2, wherein the first live streaming room is a headmost live streaming room in a live stream corresponding to the first live streaming page; and the identification displaying operation comprises a down-sliding operation performed in the first live streaming page.

4. The method of claim 1, wherein the identification displaying operation is performed in a second live streaming page, and displaying the at least one live streaming page identification in the first area of the first live streaming page, and displaying the live streaming image of the first live streaming room in the second area of the first live streaming page comprises:
switching a current page from the second live streaming page to the first live streaming page corresponding to the identification displaying operation, displaying the at least one live streaming page identification in the first area of the first live streaming page, and displaying the live streaming image of the first live streaming room in the second area of the first live streaming page.

5. The method of claim 4, wherein the identification displaying operation comprises a triggering operation for the live streaming page identification corresponding to the first live streaming page, and/or, a preset transverse sliding operation preformed in the second live streaming page.

6. The method of any of claims 1 to 5, before receiving the identification displaying operation for the live streaming page identification, further comprising:
receiving a live streaming page displaying operation performed in a media content displaying page; and
in response to the live streaming page displaying operation, switching the current page from the media content displaying page to a target live streaming page corresponding to the media content displaying page, and displaying a live streaming image of a second live streaming room in the target live streaming page, the target live streaming page comprising the first live streaming page, the second live streaming page, or a third live streaming page.

7. The method of claim 6, before receiving the live streaming page displaying operation performed in the media content displaying page, further comprising:
displaying a live streaming preview image of the second live streaming room in the media content displaying page.

8. The method of any of claims 1 to 5, wherein displaying the live streaming image of the first live streaming room in the second area of the first live streaming page comprises:
controlling the live streaming image of the first live streaming room and at least part of preset page components in the first live streaming page to move from original display positions to the second area for display.

9. The method of claim 8, further comprising:
displaying the live streaming image of the first live streaming room in full screen,
wherein displaying the at least one live streaming page identification in the first area of the first live streaming page, and displaying the live streaming image of the first live streaming room in the second area of the first live streaming page comprises:
controlling the live streaming image of the first live streaming room to move to the second area of the first live streaming page for display, or controlling the live streaming image of the first live streaming room to be scaled to the second area of the first live streaming page for display.

10. The method of any of claims 1 to 5, after displaying the at least one live streaming page identification in the first area of the first live streaming page, further comprising:
in response to a preset condition being satisfied, canceling the displaying of the at least one live streaming page identification in the first live streaming page, wherein the preset condition comprises a display duration of the at least one live streaming page identification being equal to a preset duration, and/or, a display canceling operation for the at least one live streaming page identification having been received.

11. The method of claim 10, wherein the display canceling operation comprises an up-sliding operation and/or a tapping operation performed in the first live streaming page.

12. A live streaming page displaying apparatus, comprising:
a first receiving module, configured to receive an identification displaying operation for a live streaming page identification; and
a displaying module, configured to: in response to the identification displaying operation, display at least one live streaming page identification in a first area of a first live streaming page, and display a live streaming image of a first live streaming room in a second area of the first live streaming page, the live streaming page identification being used for triggering a display of a corresponding live streaming page.

13. An electronic device, comprising:
at least one processor; and
a memory communicably connected with the at least one processor, wherein
the memory stores a computer program runnable by the at least one processor, and the computer program, when run by the at least one processor, causes the at least one processor to perform the live streaming page displaying method of any of claims 1 to 11.

14. A computer-readable storage medium, having computer instructions stored therein, wherein the computer instructions, when executed by a processor, are used for implementing the live streaming page displaying method of any of claims 1 to 11.

15. A computer program product, comprising a computer program, wherein the computer program, when run by a processor, implements the live streaming page displaying method of any of claims 1 to 11.
